# EUROPÄISCHE PATENTSCHRIFT

(11) **EP 1 910 006 B1**
(45) Veröffentlichungstag und Bekanntmachung des Hinweises auf die Patenterteilung: **21.12.2011**
(21) Anmeldenummer: 05774084.7
(22) Anmeldetag: 22.07.2005
(51) Int. Cl.: B23K 1/00, B23K 1/002, B23K 1/005, F01D 5/00, B23P 6/00

(54) **VERFAHREN ZUM REPARIEREN EINES MIT EINER GERICHTETEN MIKROSTRUKTUR UMFASSENDEN BAUTEILS, DURCH EINSTELLUNG WÄHREND DER ELEKTRON- ODER DER LASER-WÄRMEEINWIRKUNG EINES TEMPERATURGRADIENT**
METHOD OF REPAIRING A COMPONENT COMPRISING A DIRECTED MICROSTRUCTURE, BY SETTING A TEMPERATURE GRADIENT DURING EXPOSURE TO A ELECTRON OR A LASER HEAT
PROCEDE DE REPARATION D'UN COMPOSANT COMPRENANT UNE MICROSTRUCTURE ORIENTEE PAR REGLAGE, DURANT L'ACTION THERMIQUE D'UN FAISCEAU D'ELECTRONS OU LASER, D'UN GRADIENT DE TEMPERATURE

(43) Veröffentlichungstag der Anmeldung: 16.04.2008
(73) Patentinhaber: SIEMENS AKTIENGESELLSCHAFT, 80333 München (DE); MTU Aero Engines GmbH, 80995 München (DE)
(72) Erfinder: OTT, Michael, 45470 Mülheim an der Ruhr (DE); PAUL, Uwe, 40882 Ratingen (DE); SINGER, Robert, 91054 Erlangen (DE); VOLEK, Andreas, 91047 Herzogenaurach (DE)
(86) Internationale Anmeldenummer: PCT/EP2005/008038
(87) Internationale Veröffentlichungsnummer: WO 2007/012338

(56) Entgegenhaltungen:
- EP-A- 1 258 545
- EP-A- 1 561 536
- US-A- 4 705 203
- US-A- 5 806 751
- US-A- 6 050 477
- US-A1- 2004 050 913
- PATENT ABSTRACTS OF JAPAN Bd. 010, Nr. 273 (M-518), 17. September 1986 (1986-09-17) -& JP 61 095769 A (TOSHIBA CORP), 14. Mai 1986 (1986-05-14)

## Beschreibung

Die vorliegende Erfindung betrifft ein Verfahren zum Reparieren eines Bauteils, welches ein Basismaterial mit einer gerichteten Mikrostruktur umfasst gemäß dem Oberbegriff des Anspruchs 1 (siche, z.B., US6 050 477).

Bauteile von Turbinen sind heutzutage nicht selten aus Materialien mit einer gerichteten Mikrostruktur hergestellt. Als Materialien mit einer gerichteten Mikrostruktur sollen hierbei insbesondere einkristalline Materialien und Materialien, die eine Kornstruktur aufweisen, wobei die Ausdehnung der Körner eine gemeinsame Vorzugsrichtung aufweist, anzusehen sein. Z.B. können die Körner in einer bestimmten Vorzugsrichtung eine größere Abmessung aufweisen, als in den übrigen Richtungen. Bauteile mit einer derartigen Kornstruktur werden auch als direktional erstarrte Bauteile (directional solidified) bezeichnet.

Stark belastete Bauteile, wie etwa Turbinenschaufeln, unterliegen während des Betriebs einer hohen thermischen und mechanischen Beanspruchung, die zu Materialermüdungen und infolgedessen zu Rissen führen kann. Da das Herstellen von Bauteilen aus Basismaterialien, welche eine gerichtete Mikrostruktur aufweisen, relativ kostspielig ist, ist man in der Regel bemüht, derartige Bauteile nach Eintritt von Schädigungen zu reparieren. Damit wird die Funktionstüchtigkeit wieder hergestellt und das Bauteil für eine weitere Revisionsperiode einsetzbar.

Eine Möglichkeit der Reparatur beschädigter Bauteile ist beispielsweise das Löten. Bei diesem Löten wird ein Lot im Bereich der Beschädigung auf das Material des Bauteils, also auf das Basismaterial, aufgebracht und mittels Wärmeeinwirkung mit dem Basismaterial verbunden. Nach dem Löten weist das Lotmaterial jedoch bei der bisher üblichen Verfahrensweise keine einkristalline oder direktional erstarrte Struktur auf. Eine ungeordnete Struktur besitzt jedoch im Vergleich zu einer gerichteten Mikrostruktur schlechtere Materialeigenschaften - vor allem im Hochtemperaturbereich -, sodass die Lötstelle schlechtere Materialeigenschaften als das umgebende Basismaterial aufweist.

Zum Reparieren von beschädigten Bauteilen mit einer gerichteten Mikrostruktur stehen Schweißverfahren zur Verfügung, mit denen auch gerichtete Mikrostrukturen in den verschweißten Strukturen erzeugt werden können. Ein derartiges Verfahren ist beispielsweise in EP 089 090 A1 offenbart.

Weitere Verfahren bzw. zu verwendende Lotpulver sind bekannt aus den Publikationen US 6,283,356, US 4,705,203, US 4,900,394, US 6,565,678, US 4,830,934, US 4,878,953, US 5,666,643, US 6,454,885, US 6,503,349, US 5,523,170, US 4,878,953, US 4,987,736, US 5,806,751, US 5,783,318, US 5,873,703.

Die US-PS 6,050,477 offenbart ein Verfahren zum Verbinden zweier Bauteilelemente, wobei das Lot großflächig zwischen den beiden Bauteilkomponenten aufgebracht wird und ein Temperaturgradient benutzt wird, um dieselbe gerichtete Mikrostruktur zu erzeugen. Das gesamte Bauteil wird erwärmt.

Die US 2003/0075587 A1 offenbart ein Reparaturverfahren eines Bauteils mit einer gerichtet erstarrten Mikrostruktur, wobei jedoch die reparierte Stelle nicht dieselbe Mikrostruktur wie das zu reparierende Bauteil aufweist.

Die US-PS 6,495,793 offenbart ein Schweißreparaturverfahren für nickelbasierte Superlegierungen, bei dem ein Laser verwendet wird, wobei der Laser das Material, das über einen Materialförderer zugeführt wird, aufschmilzt. Außerdem wird beim Schweißprozess das Basismaterial aufgeschmolzen. Eine Aussage über die Mikrostruktur des Bauteils oder der Reparaturstelle wird nicht getroffen.

Die EP 1 258 545 A1 offenbart ein Lötverfahren ohne Temperaturgradienten.

Die EP 1 340 567 A1 offenbart ein Schweißverfahren, bei dem zusätzliches Material zu der bereits aufgeschmolzenen zu reparierenden Stelle zugefügt wird. Ebenso wird hier das Basismaterial aufgeschmolzen. Es wird ebenfalls ein Temperaturgradient verwendet, um die Bauteile mit gerichteter Mikrostruktur zu behandeln.

Die US-PS 4,878,953 offenbart ein Schweißverfahren zur Reparatur eines Bauteils mit gerichteter Mikrostruktur, bei dem Material auf die reparierende Stelle mittels Pulver aufgetragen wird und diese Stelle eine feinkörnige Mikrostruktur aufweist. Ebenso wird hier das Basismaterial aufgeschmolzen.

Schweißverfahren schmelzen jedoch immer das Basismaterial des zu reparierenden Bauteils auf. Strukturell tragende Bereiche eines Bauteils dürfen daher nicht geschweißt werden, da aufgrund des Aufschmelzens des Basismaterials die Integrität der gerichteten Struktur verloren ginge. Deshalb werden Bauteile mit einer gerichteten Mikrostruktur nur dann mittels der Schweißverfahren repariert, wenn sich die Beschädigungen nicht in strukturell tragenden Bereichen des Bauteils befinden. Befindet sich dagegen eine Beschädigung in einem strukturell tragenden Bereich des Bauteils so wird, falls eine gerichtete Schweißstruktur verlangt wird, dieses Bauteil als nicht reparierbar deklariert und gegen ein intaktes Bauteil ausgetauscht.

Aufgabe der Erfindung ist es daher, ein Verfahren zur Verfügung zu stellen, mit dem beschädigte Bauteile, welche ein Basismaterial mit einer gerichteten Mikrostruktur umfassen, auch dann repariert werden können, wenn sich die Beschädigung in einem strukturell tragenden Bereich des Bauteils befindet.

Die Aufgabe wird durch ein Verfahren nach Anspruch 1 gelöst. Die abhängigen Ansprüche enthalten vorteilhafte Ausgestaltungen der vorliegenden Erfindung, die in vorteilhafter Art und Weise beliebig miteinander kombiniert werden können.

In einem erfindungsgemäßen Verfahren zum Reparieren eines Bauteils, das ein Basismaterial mit einer gerichteten Mikrostruktur umfasst, erfolgt die Reparatur derart; dass die reparierte Stelle eine entsprechend gerichtete Mikrostruktur wie das umgebende Basismaterial aufweist. Das Basismaterial kann dabei insbesondere ein Material auf Nickelbasis sein. Im erfindungsgemäßen Verfahren wird ein Lot im Bereich einer zu reparierenden Stelle aufgebracht und mittels Wärmeeinwirkung mit dem Bauteil verlötet. Während der Wärmeeinwirkung wird dabei ein Temperaturgradient, d.h. ein Temperaturverlauf von einer höheren zu einer niedrigeren Temperatur, im Bereich der zu reparierenden Stelle erzeugt.

Beim Lötprozess wird nur das Lot, nicht aber das Basismaterial, aufgeschmolzen und wieder erstarrten gelassen, wobei das Lot eine Verbindung mit dem Basismaterial eingeht, so dass das erfindungemäße Reparaturverfahren auch in strukturell tragenden Bereichen des Bauteils zur Anwendung kommen kann, ohne die guten Materialeigenschaften des Basismaterials zu beeinträchtigen. Mittels des Temperaturgradienten lässt sich ein epitaktisches Anwachsen und Erstarren des Lotes erzielen, also ein Wachstum, in welchem die kristalline Orientierung des Lots beim Erstarren von der des Substrates, also des Basismaterials, bestimmt wird. Der Temperaturgradient ermöglicht daher das Entstehen eines einkristallinen Lotbereiches oder einer anderen gerichteten Mikrostruktur im verlöteten Lot mit gegenüber einer ungerichteten Mikrostruktur ähnlich verbesserten Werkstoffeigenschaften. Das gerichtete Wachstum erfolgt dabei in Richtung des Temperaturgradienten, also in Richtung von der niedrigeren zu der höheren Temperatur. Aufgrund des gerichteten Wachstums und der daraus resultierenden gerichteten Mikrostruktur weist das verlötete Lot ähnlich gute Materialeigenschaften wie das Basismaterial des Bauteils auf.

Vorzugsweise wird der Temperaturgradient im erfindungsgemäßen Reparaturverfahren derart erzeugt, dass er in Richtung der Orientierung der gerichteten Mikrostruktur des Basismaterials des Bauteils verläuft. Auf diese Weise lässt sich ein gerichtetes Wachstum des sich verfestigenden Lots in Richtung der Orientierung der gerichteten Mikrostruktur des Basismaterials erreichen.

In einer vorteilhaften Weiterbildung des erfindungsgemäßen Verfahrens weist das Lot einen ersten Bestandteil mit einer Schmelztemperatur, die niedriger ist, vorzugsweise deutlich niedriger, als die Schmelztemperatur des Basismaterials des Bauteils und einen zweiten Bestandteil mit einer hohen Festigkeit und einer Schmelztemperatur, die über der Schmelztemperatur des ersten Bestandteils aber unterhalb der Schmelztemperatur bis hin zur Schmelztemperatur des Basismaterials liegt, auf. Das Lot wird in dieser Weiterbildung des Verfahrens derart im Bereich der zu lötenden Stelle aufgebracht, dass der Anteil am ersten Bestandteil im Lot in der örtlichen Nähe des Basismaterials höher ist als in einem vom Basismaterial weiter entfernten Bereich. In dieser Ausgestaltung des Verfahrens dient der erste Bestandteil mit der niedrigen Schmelztemperatur dazu, die Verbindung des Lots mit dem Basismaterial herzustellen, während der Bestandteil mit der hohen Schmelztemperatur für die Widerstandsfähigkeit (Festigkeit)des verlöteten Lots sorgt. Dadurch, dass das Lot im Bereich des Basismaterials einen höheren Anteil des ersten Bestandteils umfasst, lässt sich eine gute Verbindung des verlöteten Lots mit dem Basismaterial herstellen. Andererseits ist in Bereichen, die eine größere Entfernung vom Basismaterial aufweisen, verhältnismäßig mehr an zweitem Bestandteil, also am Bestandteil mit der höheren Widerstandsfähigkeit, vorhanden, sodass die beim späteren Betrieb des Bauteils einer stärkeren Belastung ausgesetzten Bereiche der Lötstelle eine hohe Widerstandsfähigkeit aufweisen.

Zum Bereitstellen der Wärmeeinwirkung wird im erfindungsgemäßen Verfahren laser-oder Elektvonstvahl verwendet.

In einer Weiterbildung des erfindungsgemäßen Verfahrens kann eine Wärmebehandlung des Basismaterials in den Prozess des Verlötens des Lotes integriert sein. Dadurch lässt sich gleichzeitig mit dem Reparieren ein Wiederaufbereiten (Rejuvenation) der Basismaterialeigenschaften realisieren. Weitere Merkmale, Eigenschaften und Vorteile der vorliegenden Erfindung ergeben sich aus der nachfolgenden Beschreibung eines Ausführungsbeispiels unter Bezugnahme auf die beiliegenden Zeichnungen.
- Figur 1a - 1c: zeigen ein Ausführungsbeispiel für das erfindungsgemäße Verfahren,
- Figur 2: zeigt eine Abwandlung des Ausführungsbeispieles,
- Figur 3: zeigt eine Turbinenschaufel,
- Figur 4: zeigt eine Brennkammer,
- Figur 5: zeigt eine Gasturbine.

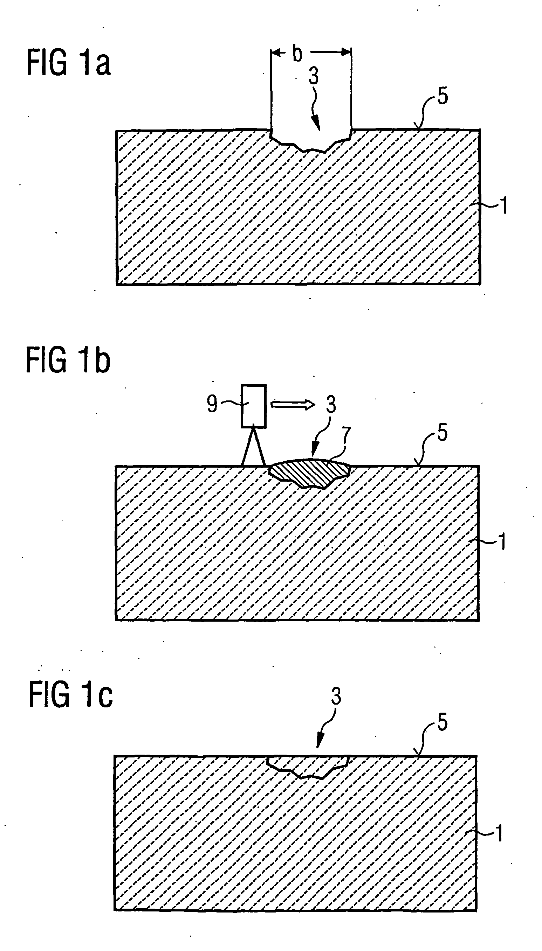

In Figur 1a ist in schematischer Ansicht ein beschädigtes Bauteil 1 dargestellt.

Das Basismaterial des Bauteils 1 umfasst eine Legierung vorzugsweise auf Nickelbasis und weist eine gerichtete Mikrostruktur, die in den Figuren durch kurze diagonal verlaufende Striche angedeutet ist, auf. Die Beschädigung 3 des Bauteils 1 befindet sich im Bereich der Oberfläche 5 und ist in der Figur als Vertiefung dargestellt.

Zum Reparieren des geschädigten Bauteils 1 wird ein Lot 7, das im vorliegenden Ausführungsbeispiel vorzugsweise in Pulverform vorliegt, auf die die vorgereinigte beschädigte Stelle 3 aufgebracht und anschließend mittels Wärmeeinwirkung mit dem Basismaterial des Bauteils 1 verlötet (Fig. 1b). Vorzugsweise wird das gesamte benötigte Lot 7 in die vorzugsweise vorgereinigte beschädigte Stelle 3 ggf. mit einem kleinen Überschuss eingebracht und insbesondere nicht während des Aufschmelzens schrittweise hinzugeführt.

Vorzugsweise wird das Lot 7 vor dem Aufschmelzen in die beschädigte Stelle 3 hineingedrückt. Das hat den Vorteil, dass die gesamte beschädigte Stelle 3 mit dem Lot 7 ausgefüllt wird. Insbesondere bei Rissen 3, die sehr tief ausgebildet sind (hohes Aspekt-Verhältnis) und eine ungleichförmige Querschnittsfläche haben, würde nach dem Stand der Technik eine äußere Pulverzufuhr mit einem Pulverförderer nicht gewährleisten, dass das Lot 7 bis zur Rissspitze gelangen kann.

Das Lot 7 kann in Form einer Paste, eines Schlickers, in reiner Pulverform oder mittels einer Folie aufgebracht und in die beschädigte Stelle 3 eingebracht werden. Weitere Formen der Einbringung oder Aufbringung sind denkbar.

Dabei ist es vorteilhaft, wenn die Materialzusammensetzung des Lotes 7 der des Bauteils 1 ähnlich ist.

"Ähnlich" bedeutet, dass das Material des Lots 7 alle Elemente des Basismaterials aufweist zuzüglich zusätzlich einem oder mehreren Schmelzpunkterniedriger (z.B. Bor, Silizium). Das Lot 7 muss jedoch zumindest einen Bestandteil umfassen, dessen Schmelztemperatur niedriger ist, als die Schmelztemperatur des Basismaterials des Bauteils 1, damit mittels der Wärmeeinwirkung ein Aufschmelzen des Lotes 7, nicht jedoch des Basismaterials des Bauteils 1 erfolgt.

Vorzugsweise besteht das Lot 7 aus einem Bestandteil, d.h. das Lot 7 besteht aus einer Legierung und nicht aus einem Pulvergemisch von zwei Legierungen.

Die Löttemperatur des Lots 7 beim Löten liegt , gemäß der Erfindung, um mindestens 30°C oder mindestens 50°C niedriger als die Schmelztemperatur des Basismaterials des Bauteils 1, sodass das Basismaterial nicht gefährdet ist. Vorzugsweise liegt der Unterschied zwischen der Löttemperatur und der Schmelztemperatur zwischen 50°C und 70°C. Dies ist insbesondere dann wichtig, wenn es sich bei dem Basismaterial um Superlegierungen handelt. Bei Superlegierungen verdampft bei hohen Temperaturen nahe seiner Schmelztemperaturen Chrom, sodass die Schmelztemperatur des Lots 7 möglichst gering gehalten und damit der Unterschied zwischen Löttemperaturen des Lots 7 und der Schmelztemperatur des Basismaterials möglichst groß gehalten werden soll.

Der Unterschied in der Löttemperatur von Lot 7 und der Schmelztemperatur des Basismaterial beträgt vorzugsweise auch mindestens 70°C, vorzugsweise 70°C ± 4°C. Der maximale Unterschied in der Löttemperatur des Lots 7 und der Schmelztemperatur des Basismaterials liegt vorzugsweise bei 120°C.

Das Lot 7 wird vorzugsweise erst so aufgeschmolzen, dass es in die zu reparierende Stelle 3 hineinläuft.

Die dazu notwendige Temperatur kann höher oder niedriger sein als die Temperaturen zur Einstellung der gerichteten Mikrostruktur.

Bezüglich der zu verlötenden Superlegierung besteht keinerlei Einschränkung. Besonders vorteilhaft für die Anwendung des erfindungsgemäßen Lots 7 haben sich jedoch die Werkstoffe PWA 1483, PWA 1484 und RENE N5 herausgestellt. PWA 1483 hat einen Schmelzpunkt um 1341°C, RENE N5 weist einen Schmelzpunkt in der Region um 1360°C - 1370°C auf.

Die Schmelzpunkte der Lote 7 liegen zwischen beispielsweise bei 1160°C - 1220°C.

Bei der Verwendung von hohen Temperaturen besteht außerdem das Problem der Rekristallation bei DS oder SX-Werkstoffen, sodass auch hier die Anforderung besteht, dass das Lot 7 in der Löttemperatur einen großen Unterschied zu der Schmelztemperatur des Basismaterials des Bauteils 1 aufweist.

Um die Wärmeeinwirkung auf das Lot 7 zu verwirklichen, ist im vorliegenden Ausführungsbeispiel der erfindung vorzugsweise eine Elektronenstrahlkanone 9 vorhanden, welche das auf zuschmelzende Lot 7 bestrahlt und ihm so die zum Schmelzen nötige Wärme zuführt.

Die Elektronenstrahlbehandlung erfolgt vorzugsweise im Vakuum. Insbesondere bei oxidationsempfindlichen Materialien, wie z. B. bei Superlegierungen spielt die Oxidation eine wichtige Rolle, sodass eine Wärmebehandlung mittels eines Lasers oder eines Elektronenstrahls sowieso im Vakuum durchgeführt werden sollte. Die Elektronenstrahlbehandlung hat den Vorteil, dass sie zu einer besseren Energieeinkopplung in das Material führt und dass sich die Elektronenstrahlen berührungslos durch Spulen, die in dem Fall die Optik darstellen, über die zur reparierenden Stelle 3 bewegen lassen.

Die Wärmeeinwirkung auf das Lot 7 kann auch, gemäß der Erfindung, mittels Laserstrahl erfolgen.

Die Laserleistung oder die Leistung der Elektronenstrahlen ist so gemessen, dass sie das Lot 7 vollständig aufschmelzen und auf Löttemperatur bringen kann. Dabei liegt die Löttemperatur des Lots 7 teilweise um bis zu 140° über der Schmelztemperatur des Lots 7.

Die Leistung eines Nd-YAG Lasers liegt dabei vorzugsweise zwischen 1500 und 2000W.

Erfindungsgemäß wird während des Lötvorgangs gezielt in Vorzugsrichtung der Mikrostruktur des Basismaterials ein Temperaturgradient im Bereich der Beschädigung 3 hergestellt. Das Herstellen des Temperaturgradienten kann, gemäß der Erfindung dadurch erfolgen, indem das Bauteil 1 und die Elektronenstrahlkanone 9 relativ zueinander bewegt werden. Im Ausführungsbeispiel wird daher die Elektronenstrahlkanone 9 parallel zur Oberfläche 5 über das Lot 7 geführt. Die Geschwindigkeit, mit der das Führen der Elektronenstrahlkanone 9 über das Lot 7 erfolgt, ist gemäß der Erfindung, dabei derart gewählt, dass sich der gewünschte Temperaturgradient im Bereich der Beschädigung 3, d.h. im Lot 7, einstellt. Der Temperaturgradient induziert dabei das Entstehen einer epitaktisch gerichteten Mikrostruktur, wenn das durch die Elektronenstrahlkanone 9 aufgeschmolzene Lot 7 wieder erstarrt. Die Steilheit des Temperaturgradienten kann dabei beispielsweise durch die Geschwindigkeit, mit der Elektronenstrahlkanone 9 und Bauteil 1 relativ zueinander bewegt werden, oder die Leistung eingestellt werden. Unter der Steilheit des Gradienten ist hierbei die Zu- oder Abnahme der Temperatur pro Längeneinheit zu verstehen. Die Steilheit des Temperaturgradienten, die zum Entstehen einer gerichteten Mikrostruktur im sich verfestigenden Lot 7 führt, hängt dabei von der Zusammensetzung des Lotes 7 ab.

Der Temperaturgradient, der eingestellt werden muss, ergibt sich aus dem so genannten GV-Diagramm, das für verschiedene Metalle und metallische Legierungen unterschiedlich ist und für jede Legierung berechnet oder experimentell bestimmt werden muss. Eine Kurve L in dem GV-Diagramm trennt den Bereich der beiden Parameter Erstarrungsgeschwindigkeit und Temperaturgradient, in welchem die Legierung globulistisch erstarrt von jenem, in welchem die Legierung zu einem dendritisch gerichteten Gefüge erstarrt. Eine Beschreibung und Erklärung des GV-Diagramms befindet sich z.B. im Material Science Engineering Band 65, 1984 in der Publikation von J.D. Hunt mit dem Titel "Columnar to equiangular transition".

Der Temperaturgradient bestimmt sich aus der Löttemperatur des Lots 7 und der Temperatur des Bauteils auf der Rückseite der zur reparierenden Stelle 3.

Vorzugsweise wird das Bauteil 1 nicht gekühlt oder auf Raumtemperatur gehalten oder gegebenenfalls bis auf 300° vorgewärmt, wie es in den Schriften WO 98/20995, WO 98/05450, WO 96/05006 oder EP 0 631 832 A1 beschrieben ist.

Verfahren zum Herstellen von einkristallinen Strukturen mittels eines Lasers oder in äquivalenter Weise von Elektronenstrahlen sind auch in der EP 1 437 426 A1 oder in der WO 03/087439 A1 offenbart, die Bestandteil dieser Offenbarung bezüglich der Verwendung von Laser oder Elektronenstrahlen für die Erzeugung von einkristallinen Strukturen sein sollen.

Im vorliegenden Ausführungsbeispiel erstreckt sich die Vorzugsrichtung der gerichteten Mikrostruktur im Basismaterial des Bauteils 1 innerhalb der Zeichenebene von links nach rechts. Um im erstarrenden Lot 7 das Entstehen einer gerichteten Mikrostruktur zu induzieren, deren Vorzugsrichtung mit der im Basismaterial übereinstimmt, erfolgt die Bewegung der Elektronenstrahlkanone 9 relativ zum Bauteil 1 parallel zur Vorzugsrichtung der gerichteten Mikrostruktur des Basismaterials.

Wenn das Bauteil 1 eine SX-Struktur aufweist kann die reparierte Stelle 3 ebenfalls eine SX- aber auch eine DS-Struktur aufweisen.

Wenn das Bauteil 1 eine DS-Struktur aufweist kann die reparierte Stelle 3 ebenfalls eine DS- aber auch eine SX-Struktur aufweisen.

Vorzugweise weisen Bauteil 1 und reparierte Stelle 3 die gleiche Mikrostruktur auf.

Ebenso braucht das Bauteil 1 keine gerichtet erstarrte Struktur aufzuweisen, wobei in der reparierten Stelle 3 durch die gerichtet erstarrte Struktur bei hohen Temperaturen eine hohe Festigkeit des Bauteils 1 erreicht wird, weil die gerichtet erstarrte Struktur des Lots 7 in der reparierten Stelle den negativen Effekt des niedrigen Schmelzpunkts auf die mechanische Festigkeit bei hohen Temperaturen ausgleicht.

Eine Breite b (Fig. 1a) der zu reparierenden Stelle beträgt zwischen 1µm und 1000µm, vorzugsweise um 500 µm. Der Laser oder Elektronenstrahl kann vorzugsweise die gesamte Breite b der zu reparierenden Stelle 3 erfassen. Da das Bauteil 1 nur im Bereich der zu reparierenden Stelle 3 erwärmt wird, liegt hier ein lokales Reparaturverfahren oder lokales Lotverfahren vor.

Vorzugsweise liegt die Breite b der zu reparierenden Stelle 3 zwischen 5µm und 300µm.

Ebenso vorteilhaft ist es, dass die zu reparierende Stelle 3 eine Breite b zwischen 5µm und 100µm aufweist.

Weiterhin sind können Breiten b eines Risses zwischen 20µm und 300µm repariert werden

Vorzugsweise weist die zu reparierende Stelle 3 Breiten b zwischen 20µm und 100µm auf.

Ebenso vorzugsweise weist die zu reparierende Stelle 3 eine Breite zwischen 50µm und 300µm auf.

Weitere Vorteile werden erzielt, wenn die zu reparierende Stelle 3 eine Breite b zwischen 50µm und 200µm aufweist. Außerdem werden Risse 3, die eine Breite zwischen 50µm und 100µm aufweisen, in vorteilhafter Art und Weise durch das Verfahren repariert.

Bezüglich der Länge der zu reparierenden Stelle gibt es keinerlei Beschränkungen. Hier muss jedoch der Laser 9 und die Elektronenstrahlen in Längsrichtung gegebenenfalls (in die Zeichnungsebene hinein) verfahren werden, wobei der Laser in dieser Richtung, wie in der WO 03/087439 A1 bewegt wird. Die Verfahrgeschwindigkeiten der Laserstrahlen oder der Elektronenstrahlen liegen vorzugsweise bei 100mm/min bis 130mm/min.

Die Haltezeiten des Laser- oder Elektronenstrahls richten sich nach dem Material und nach der Geschwindigkeit der Erstarrung.

Figur 1c zeigt das Bauteil 1 nach dem Reparieren der Beschädigung 3. Wie durch die diagonal verlaufenden Striche im Bereich des nun verfestigten Lots 7 angedeutet ist, weist das verfestigte Lot 7, also das Reparaturmaterial, eine gerichtete Mikrostruktur auf, welche dieselbe Vorzugsrichtung wie die gerichtete Mikrostruktur des Basismaterials des Bauteils 1 besitzt.

Ebenso kann der Elektronenstrahl so aufgeweitet sein, dass er beispielsweise das gesamte Lot 7 bestrahlt und jedenfalls dadurch ganz erwärmt.

Ein Verfahren der Elektronenstrahlkanone ist also nicht unbedingt notwendig.

Durch die Abfuhr von Wärme des Lots 7 in das Substrat des Bauteils 1 entsteht innerhalb des Lots 7 ein Temperaturgradient. An der äußeren Oberfläche des Lots 7 ist, gemäß der Erfindung die Temperatur am höchsten und an der Grenzfläche des Lots 7 zu dem Substrat des Bauteils 1 hin ist es kälter. Ggf. kann, gemäß der Erfindung das Bauteil 1 auf der Rückseite, der Beschädigung 3 gegenüber oder irgendwo sonst gekühlt oder erwärmt werden, um einen gewünschten bestimmten Temperaturgradienten in Abhängigkeit von der Geometrie des Bauteils 1 und der Beschädigung 3 einzustellen.

Im vorliegenden Ausführungsbeispiel wurde zum Zuführen der Wärme eine Elektronenstrahlkanone 9 verwendet.

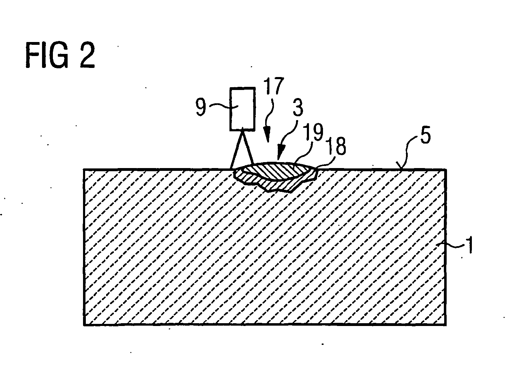

Eine Abwandlung des mit Bezug auf die Figuren 1a bis 1c dargestellten Ausführungsbeispiels ist in Figur 2 dargestellt. Im der Abwandlung des Ausführungsbeispiels umfasst das auf die beschädigte Stelle 3 aufgetragene Lot 17 zwei Bestandteile, von denen der erste Bestandteil eine Schmelztemperatur aufweist, die deutlich niedriger ist, als die des Basismaterials des Bauteils 1. Der zweite Bestandteil weist hingegen eine Schmelztemperatur auf, die im Bereich zwischen der Schmelztemperatur des ersten Bestandteils und der Schmelztemperatur des Basismaterials liegt. Außerdem weist der zweite Bestandteil insbesondere auch eine hohe Festigkeit etwa in der Größenordnung des Basismaterials auf.

Das Auftragen des pulverförmigen Lots 17 auf die vorgereinigte beschädigte Stelle 3 erfolgt derart, dass zuerst eine Lotzusammensetzung 18 aufgetragen wird, in welcher der erste Bestandteil einen relativ hohen Anteil am Pulver ausmacht. Anschließend wird eine Lotzusammensetzung 19 aufgetragen, in der der erste Bestandteil gegenüber dem zweiten Bestandteil verringert ist. Wenn nun ein Verlöten des Lots 17 mit dem Basismaterial erfolgt, erleichtert der hohe Anteil des ersten Bestandteils, also des Bestandteils mit der niedrigen Schmelztemperatur, ein einfaches Verlöten des Lots mit dem Basismaterial, wo hingegen die Lotzusammensetzung 19, in dem der Anteil des ersten Bestandteils verringert ist, eine höhere Festigkeit der reparierten Stelle gewährleistet.

Ebenso ist es möglich, dass die Lotzusammensetzung 18 eine höhere Festigkeit der zu reparierenden Stelle 3 gewährleistet und die oberflächennähere Lotzusammensetzung 19 einen höheren Oxidations- und/oder Korrosionsschutz aufweist.

Statt diesem zweischichtigen Aufbau des Lots 7 kann das Lot 7 in der zu reparierenden Stelle 3 einen Materialgradienten vom Grund der Stelle 3 bis zur Oberfläche 5 des Bauteils aufweisen, in dem sich die Zusammensetzung des Lots 7 kontinuierlich verändert.

In beiden Ausführungsvarianten des erfindungsgemäßen Verfahrens ist es auch möglich, die Wärmeeinwirkung zum Verlöten des Lotes 7, 17 mit dem Basismaterial des Bauteils 1 gleichzeitig zum Durchführen einer Wärmebehandlung des Basismaterials zu verwenden, um so eine Wiederaufbereitung (Rejuvenation) der Basismaterialeigenschaften zu ermöglichen.

Im beschriebenen Ausführungsbeispiel und seiner Abwandlung wird das Lot 7, 17 in Pulverform auf die zu reparierende Stelle aufgetragen. Alternativ kann es jedoch auch als Folie oder Paste aufgetragen werden.

Das Pulver des Lots 7, 17 liegt beispielsweise als Nanopulver vor, d. h. die Korngrößen des Pulvers sind kleiner 500 oder kleiner 300 oder kleiner 100 Nanometer. Es hat sich nämlich herausgestellt, dass ein Lot 7 aus Nanopulver eine niedrigere Schmelztemperatur gegenüber einem konventionellen Pulver derselben Zusammensetzung mit mikrometergroßen Körnern aufweist. Ebenso kann das Pulver des Lots 7, 17 aus einem Gemisch von Nanopulver und konventionellen Pulver, d. h. einem Pulver, das Korngrößen im Mikrometerbereich aufweist, bestehen. Dadurch kann die Schmelzpunkterniedrigung gezielt eingestellt werden.

Ebenso kann die Folie oder die Paste, mittels der das Lot 7 aufgetragen wird, teilweise oder ganz ein Pulver aus Nanopulver aufweisen.

Der Vorteil gegenüber dem Stand der Technik besteht darin, dass hier das Pulver nicht über einen Pulverförderer zugeführt wird, sondern bereits verdichtet der zu reparierenden Stelle 3 zugeführt wird. Ein Nanopulver über eine Düse einer zu reparierenden Stelle 3 zuzuführen, wie es aus dem Stand der Technik bekannt ist, ist fast unmöglich, da die Körner des Nanopulvers viel zu klein sind und beim Sprühen sehr breit streuen würden.

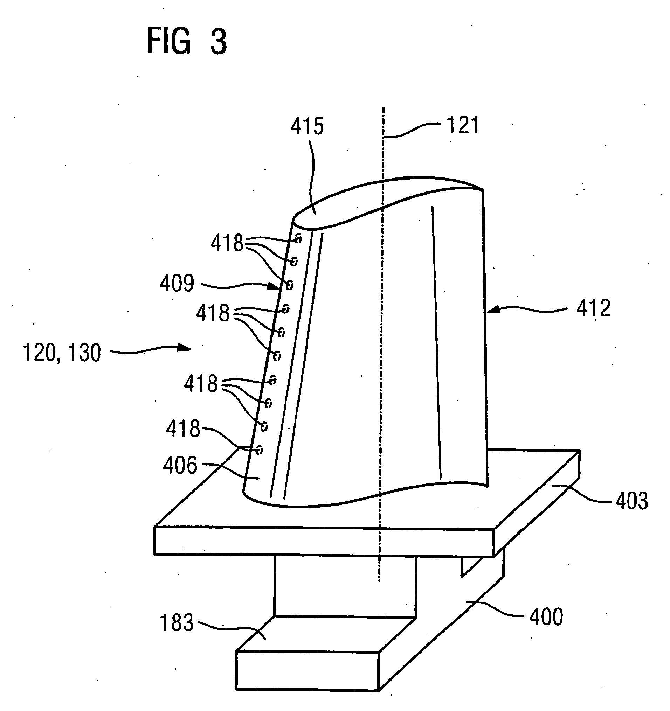

Figur 3 zeigt in perspektivischer Ansicht eine Laufschaufel 120 oder Leitschaufel 130 einer Strömungsmaschine, die sich entlang einer Längsachse 121 erstreckt und die mit dem erfindungsgemäßen Verfahren repariert wird.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 ist hierbei durch ein Gussverfahren mittels gerichteter Erstarrung gefertigt.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₄-ZrO₃, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

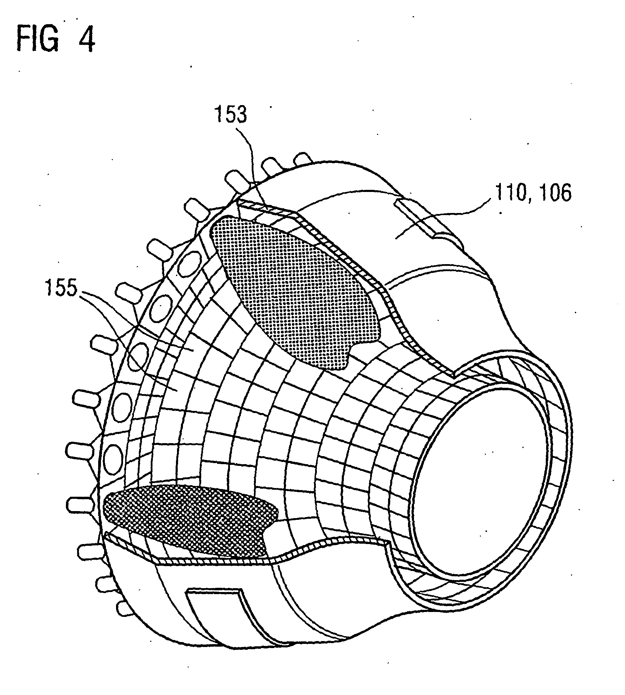

Die Figur 4 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

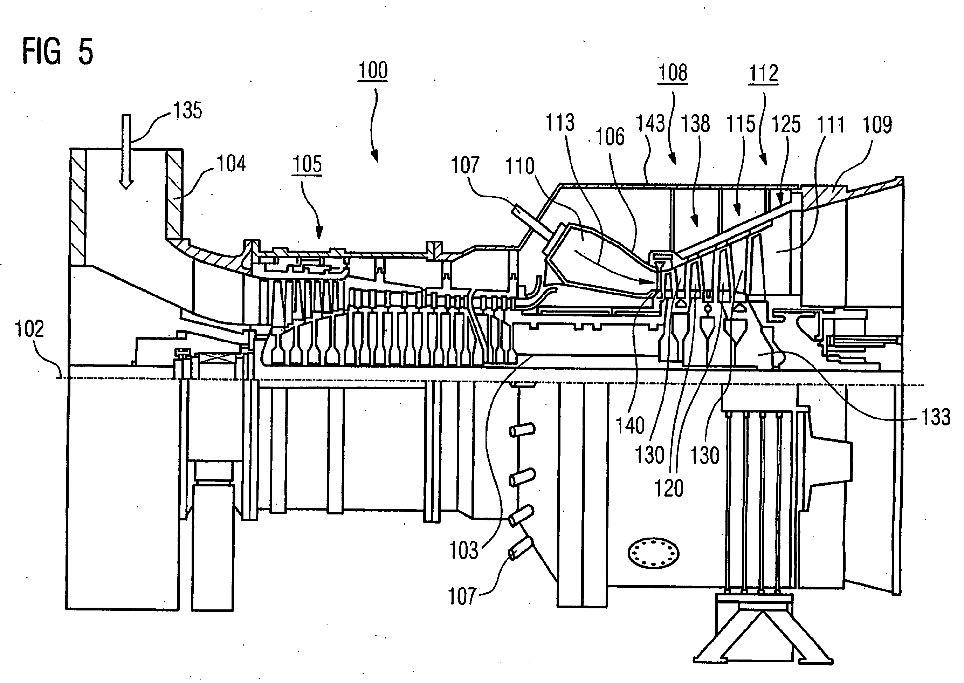

Die Figur 5 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120, gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden nebel den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Reparaturverfahren zum Reparieren eines Bauteils (1), welches ein Basismaterial mit einer gerichteten Mikrostruktur umfasst,
bei dem ein Lot (7, 17) auf einen Bereich einer zu reparierenden Stelle (3) aufgebracht wird,
wobei ein Aufschmelzen des Lotes (7), nicht jedoch des Basismaterials des Bauteils (1) erfolgt,
dadurch kenngezeichnet, dass das Lot (7, 17) einen Bestandteil umfasst, dessen Löttemperatur um mindestens 30°C niedriger ist als die Schmelztemperatur des Basismaterials, und anschließend durch Wärmeeinwirkung mittels Elektronenstrahlen oder Laserstrahlen mit dem Bauteil (1) so verlötet wird, dass an der äußeren Oberfläche des Lots (7) die Temperatur am höchsten ist und an der Grenzfläche des Lotes (7) zu dem Substrat des Bauteils (1) hin es költer ist und, wobei eine Relativgeschwindigkeit des Laserstrahles und Bauteils (1) zueinander oder
die Laserleistung oder
eine Erwärmung oder eine Kühlung auf der Rückseite gegenüber der Beschädigung (3) so gewählt wird,
dass ein Temperaturgradient im Bereich der zu reparierenden Stelle (3) erzeugt wird,
so dass dieselbe gerichtete Mikrostruktur in der reparierten Stelle (3) wie das umgebende Basismaterial erzeugt wird.

2. Verfahren nach Anspruch 1,
**dadurch gekennzeichnet, dass**
der Unterschied zwischen der Löttemperatur des Lots (7, 17) und der Schmelztemperatur des Basismaterials des Bauteils (1) mindestens 50°C beträgt.

3. Verfahren nach Anspruch 1,
**dadurch gekennzeichnet, dass**
der Unterschied zwischen der Löttemperatur des Lots (7, 17) und der Schmelztemperatur des Basismaterials des Bauteils (1) mindestens 70°C beträgt.

4. Verfahren nach Anspruch 1,
**dadurch gekennzeichnet, dass**
der Unterschied zwischen der Löttemperatur des Lots (7, 17) und der Schmelztemperatur des Basismaterials 70°C ± 4°C beträgt.

5. Verfahren nach Anspruch 1, 2, 3 oder 4,
**dadurch gekennzeichnet, dass**
zuerst das Lot (7, 17) vollständig aufgebracht wird und dann vollständig aufgeschmolzen wird.

6. Verfahren nach Anspruch 1, 2, 3 oder 4,
**dadurch gekennzeichnet, dass**
das Bauteil (1) aus einer nickel- oder kobaltbasierten Superlegierung besteht,
insbesondere aus Rene N5, PWA 1483 oder PWA 1484.

7. Verfahren nach Anspruch 1, 5 oder 6,
**dadurch gekennzeichnet, dass**
der Temperaturgradient derart ausgerichtet ist,
dass er in Richtung der Orientierung der gerichteten Mikrostruktur des Basismaterials des Bauteils (1) verläuft.

8. Verfahren nach einem oder mehreren der vorherigen Ansprüche,
**dadurch gekennzeichnet,**
**dass** das Lot (17) einen ersten Bestandteil mit einer Schmelztemperatur,
die niedriger ist als die Schmelztemperatur des Basismaterials des Bauteils (1),
und einen zweiten Bestandteil mit einer hohen Widerstandsfähigkeit und einer Schmelztemperatur,
die über der Schmelztemperatur des ersten Bestandteils aber unterhalb der Schmelztemperatur des Basismaterials bis hin zur Schmelztemperatur des Basismaterials liegt, umfasst und
**dass** das Lot (17) derart im Bereich der zu lötenden Stelle aufgebracht wird,
**dass** der Anteil an erstem Bestandteil im Lot (17) in der Nähe (18) des Basismaterials höher ist, als in einem vom Basismaterial weiter entfernten Bereich (19).

9. Verfahren nach einem oder mehreren der Ansprüche 1, 7 oder 8,
bei dem der Temperaturgradient mittels eines optischen Heizvorgangs oder eines induktiven Heizvorgangs hergestellt wird.

10. Verfahren nach einem oder mehreren der Ansprüche 1, 7 bis 8,
bei dem der Temperaturgradient mittels eines Gießofens zum Herstellen eines Gussteils mit direktional gerichteter Mikrostruktur hergestellt wird.

11. Verfahren nach einem oder mehreren der Ansprüche 1 bis 10,
bei dem eine Wärmebehandlung des Basismaterials in den Prozess des Verlötens des Lotes (7, 17) integriert ist.

12. Verfahren nach einem oder mehreren der vorherigen Ansprüche,
**dadurch gekennzeichnet, dass**
das Pulver des Lots (7, 17) teilweise,
insbesondere ganz aus Nanopulver besteht.

13. Verfahren nach Anspruch 1 oder 5,
**dadurch gekennzeichnet, dass**
das Lot (7, 17) in Form einer Paste, eines Schlickers oder einer Folie auf oder in die zu reparierende Stelle (3) eingebracht wird.

14. Verfahren nach Anspruch 1, 2, 3 oder 4,
**dadurch gekennzeichnet, dass**
das Lot (7) nur einen Bestandteil umfasst.

15. Verfahren nach Anspruch 1,
**dadurch gekennzeichnet, dass**
die zu reparierende Stelle (3) eine Breite (b) zwischen 1µm und 1000µm aufweist.

16. Verfahren nach Anspruch 1,
**dadurch gekennzeichnet, dass**
die Laserleistung oder die Leistung der Elektronenstrahlen so bemessen ist,
dass sie das Lot (7, 17) aufschmilzt.

17. Verfahren nach Anspruch 1 oder 16,
**dadurch gekennzeichnet, dass**
die Verfahrgeschwindigkeit oder Haltezeiten der Laserstrahlen oder Elektronenstrahlen so bemessen ist, dass das Lot (7, 17) im Bereich der zu reparierenden Stelle (3) dendritisch erstarrt.

18. Verfahren nach Anspruch 1, 5, 6, 8, 15 oder 16,
**dadurch gekennzeichnet, dass**
der Temperaturgradient bestimmt ist durch die Löttemperatur des Lots (7, 17) und der Temperatur des Bauteils (1), insbesondere liegt die Temperatur des Bauteils (1) bei 300° oder bei Raumtemperatur liegt.

19. Verfahren nach Anspruch 15,
**dadurch gekennzeichnet, dass**
die zu reparierende Stelle (3) eine Breite (b) zwischen 1µm und 500µm aufweist.

20. Verfahren nach Anspruch 15,
**dadurch gekennzeichnet, dass**
die zu reparierende Stelle (3) eine Breite (b) zwischen 400µm und 600µm, insbesondere um 500µm aufweist.

21. Verfahren nach Anspruch 15,
**dadurch gekennzeichnet, dass**
die zu reparierende Stelle (3) eine Breite (b) zwischen 500µm und 1000µm, insbesondere um 750µm aufweist.

22. Verfahren nach Anspruch 15,
**dadurch gekennzeichnet, dass**
die zu reparierende Stelle (3) eine Breite (b) zwischen 500µm und 750µm aufweist.

23. Verfahren nach Anspruch 15,
**dadurch gekennzeichnet, dass**
die zu reparierende Stelle (3) eine Breite (b) zwischen 750µm und 1000µm aufweist.

24. Verfahren nach Anspruch 1, 2, 3, 4, 5, 7,
**dadurch gekennzeichnet, dass**
die Wärmeinwirkung durch Laserstrahlen,
insbesondere im Vakuum, erfolgt.

## Claims

1. Repair process for repairing a component (1),
which comprises a base material with a directional microstructure,
in which process a solder (7, 17) is applied in the region of a location (3) that is to be repaired,
wherein the solder (7) is melted but the base material of the component (1) is not, **characterized in that**
the solder (7, 17) comprises a constituent,
the soldering temperature of which is at least 30°C lower than the melting temperature of the base material, and
then is soldered to the component (1) with the action of heat by means of electron beams or laser beams,
**in that** the temperature is highest at the outer surface of the solder (7) and cooler at the interface between the solder (7) and the substrate of the component (1), and
wherein a relative velocity of the electron beam or of the laser beam and component (1) with respect to one another or the electron beam power or the laser power or a heating or a cooling on the rear side with respect to the damage (3) is selected in such a way as to generate a temperature gradient in the region of the location (3) that is to be repaired,
so that the same directional microstructure is generated in the repaired location (3) as the surrounding base material.

2. Process according to Claim 1,
**characterized in that**
the difference between the soldering temperature of the solder (7, 17) and the melting temperature of the base material of the component (1) is at least 50°C.

3. Process according to Claim 1,
**characterized in that**
the difference between the soldering temperature of the solder (7, 17) and the melting temperature of the base material of the component (1) is at least 70°C.

4. Process according to Claim 1,
**characterized in that**
the difference between the soldering temperature of the solder (7, 17) and the melting temperature of the base material is 70°C ± 4°C.

5. Process according to Claim 1, 2, 3 or 4,
**characterized in that**
first of all the solder (7, 17) is completely applied and then it is completely melted.

6. Process according to Claim 1, 2, 3 or 4,
**characterized in that**
the component (1) consists of a nickel- or cobalt-base superalloy,
in particular of Rene N5, PWA 1483 or PWA 1484.

7. Process according to Claim 1, 5 or 6,
**characterized in that**
the temperature gradient is oriented in such a manner that it extends in the direction of the orientation of the directional microstructure of the base material of the component (1).

8. Process according to one or more of the preceding claims, **characterized**
**in that** the solder (17) comprises a first constituent with a melting temperature, which is lower than the melting temperature of the base material of the component (1) and a second constituent with a high durability and a melting temperature
which is above the melting temperature of the first constituent but below the melting temperature of the base material up to the melting temperature of the base material, and
**in that** the solder (17) is applied in such a manner in the region of the location that is to be soldered
that the proportion of first constituent in the solder (17) is higher in the vicinity (18) of the base material than in a region (19) further away from the base material.

9. Process according to one or more of Claims 1, 7 or 8,
in which the temperature gradient is produced by means of an optical heating operation or an inductive heating operation.

10. Process according to one or more of Claims 1, 7 to 8,
in which the temperature gradient is produced by means of a casting furnace for producing a casting with a directionally directed microstructure.

11. Process according to one or more of Claims 1 to 10,
in which a heat treatment of the base material is integrated into the process of soldering the solder (7, 17).

12. Process according to one or more of the preceding claims,
**characterized in that**
the powder of the solder (7, 17) partly, and in particular completely, comprises nano-powder.

13. Process according to Claim 1 or 5,
**characterized in that**
the solder (7, 17) is introduced onto or into the location (3) that is to be repaired in the form of a paste, a slurry or a foil.

14. Process according to Claim 1, 2, 3 or 4,
**characterized in that**
the solder (7) comprises just one constituent.

15. Process according to Claim 1,
**characterized in that**
the location (3) that is to be repaired has a width (b) of between 1 µm and 1000 µm.

16. Process according to Claim 1,
**characterized in that**
the laser power or the power of the electron beams is such that it partially melts the solder (7, 17).

17. Process according to Claim 1 or 16,
**characterized in that**
the speed of travel or holding times of the laser beams or electron beams is such
that the solder (7, 17) solidifies in dendritic form in the region of the location (3) that is to be repaired.

18. Process according to Claim 1, 5, 6, 8, 15 or 16,
**characterized in that**
the temperature gradient is determined by the soldering temperature of the solder (7, 17) and the temperature of the component (1),
and in particular the temperature of the component (1) is 300° or room temperature.

19. Process according to Claim 15,
**characterized in that**
the location (3) that is to be repaired has a width (b) of between 1 µm and 500 µm.

20. Process according to Claim 15,
**characterized in that**
the location (3) that is to be repaired has a width (b) of between 400 µm and 600 µm in particular around 500 µm.

21. The process according to Claim 15,
**characterized in that**
the location (3) that is to be repaired has a width (b) of between 500 µm and 1000 µm, in particular around 750 µm.

22. Process according to Claim 15,
**characterized in that**
the location (3) that is to be repaired has a width (b) of between 500 µm and 750 µm.

23. Process according to Claim 15,
**characterized in that**
the location (3) that is to be repaired has a width (b) of between 750 µm and 1000 µm.

24. Process according to Claim 1, 2, 3, 4, 5, 7,
**characterized in that**
the action of heat is effected by laser beams, in particular in vacuo.

## Revendications

1. Procédé de réparation pour réparer un élément ( 1 ) qui comprend un matériau de base ayant une microstructure orientée,
dans lequel on dépose une brasure ( 7, 17 ) sur une partie d'un endroit ( 3 ) à réparer,
dans lequel on effectue une fusion de la brasure ( 7 ), mais non du matériau de base de l'élément ( 1 ),
**caractérisé en ce que** la brasure ( 7, 17 ) comprend un constituant dont la température de brasage est plus basse d'au moins 30°C que le point de fusion du matériau de base et est ensuite brasé à l'élément ( 1 ) par apport de chaleur au moyen de faisceaux d'électrons ou de faisceaux laser,
**en ce que** sur la surface extérieure de la brasure ( 7 ) la température est la plus haute et **en ce qu'**il fait plus froid sur la surface limite de la brasure ( 7 ) en direction du substrat de l'élément ( 1 ), et dans lequel une vitesse relative du faisceau d'électrons ou du faisceau laser et de l'élément ( 1 ) l'un par rapport à l'autre ou la puissance du faisceau d'électrons ou la puissance laser ou un échauffement ou un refroidissement sur la face arrière vis-à-vis d'un endommagement ( 3 ) est choisie de manière à produire un gradient de température dans la zone de l'endroit ( 3 ) à réparer,
de manière à obtenir la même microstructure orientée dans l'endroit ( 3 ) à réparer que dans le matériau de base qui l'entoure.

2. Procédé suivant la revendication 1,
**caractérisé en ce que**
la différence entre la température de la brasure ( 7, 17 ) et le point de fusion du matériau de base de l'élément ( 1 ) est d'au moins 50°C.

3. Procédé suivant la revendication 1,
**caractérisé en ce que**
la différence entre la température de la brasure ( 7, 17 ) et le point de fusion du matériau de base de l'élément ( 1 ) est d'au moins 70°C.

4. Procédé suivant la revendication 1,
**caractérisé en ce que**
la différence entre la température de la brasure ( 7, 17 ) et le point de fusion du matériau de base est de 70°C à plus ou moins 4°C.

5. Procédé suivant la revendication 1, 2, 3 ou 4,
**caractérisé en ce que**
l'on dépose d'abord complètement la brasure ( 7, 17 ) et on la fait fondre ensuite complètement.

6. Procédé suivant la revendication 1, 2, 3 ou 4,
**caractérisé en ce que**
l'élément ( 1 ) est en un super alliage à base de nickel ou à base de cobalt,
notamment en Rene N5, PWA 1483 ou PWA 1484.

7. Procédé suivant la revendication 1, 5 ou 6,
**caractérisé en ce que**
l'on dirige le gradient de température de manière à ce qu'il s'étende dans la direction de l'orientation de la micro structure orientée du matériau de base de l'élément ( 1 ).

8. Procédé suivant l'une ou plusieurs des revendications précédentes,
**caractérisé en ce que**
la brasure ( 17 ) a un premier constituant ayant un point de fusion,
qui est plus bas que le point de fusion du matériau de base de l'élément ( 1 ),
et un deuxième constituant ayant une capacité de résistance plus grande et un point de fusion qui est supérieur au point de fusion du premier constituant mais inférieur au point de fusion du matériau de base en allant jusqu'au point de fusion du matériau de base et
**en ce que** l'on dépose la brasure ( 17 ) dans la zone de l'endroit à braser de manière à ce qu'une proportion du premier constituant de la brasure ( 17 ) soit plus grande à proximité ( 18 ) du matériau de base que dans une zone ( 19 ) plus éloignée du matériau de base.

9. Procédé suivant l'une ou plusieurs des revendications 1, 7 ou 8,
dans lequel on produit le gradient de température au moyen d'un procédé de chauffage optique ou d'un procédé de chauffage par induction.

10. procédé suivant l'une ou plusieurs des revendications 1, 7 à 8,
dans lequel on produit le gradient de température au moyen d'un four de coulée pour la production d'une pièce de coulée ayant une micro structure à orientation directionnelle.

11. Procédé suivant l'une ou plusieurs des revendications 1 à 10,
dans lequel on intègre un traitement thermique du matériau de base dans le processus de brasage de la brasure ( 7, 17 ).

12. procédé suivant l'une ou plusieurs des revendications précédentes,
**caractérisé en ce que**
la poudre de la brasure ( 7, 17 ) est constituée en partie, notamment en totalité, de nanopoudre.

13. procédé suivant la revendication 1 ou 5,
**caractérisé en ce que**
l'on introduit la brasure ( 7, 17) sous forme d'une pâte, d'une barbotine ou d'une feuille sur ou dans l'endroit ( 3 ) à réparer.

14. procédé suivant la revendication 1, 2, 3 ou 4,
**caractérisé en ce que**
la brasure ( 7 ) ne comprend qu'un constituant.

15. procédé suivant la revendication 1,
**caractérisé en ce que**
l'endroit ( 3 ) à réparer a une largeur ( b ) comprise entre 1µm et 1000µm.

16. Procédé suivant la revendication 1,
**caractérisé en ce que**
la puissance laser ou la puissance du faisceau d'électron est telle que la brasure ( 7, 17 ) fond.

17. Procédé suivant la revendication 1 ou 16,
**caractérisé en ce que**
la vitesse de déplacement ou les durées de maintien des faisceaux laser ou des faisceaux d'électron est telle que la brasure ( 7, 17 ) se solidifie d'une manière dendritique dans la zone de l'endroit ( 3 ) à réparer.

18. Procédé suivant la revendication 1, 5, 6, 8, 15 ou 16,
**caractérisé en ce que**
le gradient de température est déterminé par la température de brasage de la brasure ( 7, 17) et par la température de l'élément ( 1 ), la température de l'élément ( 1 ) étant notamment de 300° ou étant la température ambiante.

19. Procédé suivant la revendication 15,
**caractérisé en ce que**
l'endroit ( 3 ) à réparer a une largeur ( b ) comprise entre en 1µm et 500µm.

20. Procédé suivant la revendication 15,
**caractérisé en ce que**
l'endroit ( 3 ) à réparer a une largeur ( b ) comprise entre 400µm et 600µm, notamment d'environ 500µm.

21. Procédé suivant la revendication 15,
**caractérisé en ce que**
l'endroit ( 3 ) à réparer a une largeur ( b ) comprise entre 500µm et 1000µm, notamment d'environ 750µm.

22. Procédé suivant la revendication 15,
**caractérisé en ce que**
l'endroit ( 3 ) à réparer a une largeur ( b ) comprise entre 500µm et 750µm.

23. Procédé suivant la revendication 15,
**caractérisé en ce que**
l'endroit ( 3 ) à réparer a une largeur ( b ) comprise entre 750µm et 1000µm.

24. Procédé suivant la revendication 1, 2, 3, 4, 5, 7,
**caractérisé en ce que**
l'apport de chaleur s'effectue par faisceau laser, notamment sous vide.
